Europäisches Patentamt

(19) European Patent Office

Office européen des brevets

(11) Veröffentlichungsnummer: **0 098 805**
**B1**

(12) **EUROPÄISCHE PATENTSCHRIFT**

(45) Veröffentlichungstag der Patentschrift:
**29.01.86**

(51) Int. Cl.⁴: **G 03 B 27/32**

(21) Anmeldenummer: **83810298.6**

(22) Anmeldetag: **01.07.83**

(54) Hellraumvergrösserungsgerät.

(30) Priorität: **07.07.82 GB 8219620**
**14.01.83 GB 8300989**

(43) Veröffentlichungstag der Anmeldung:
**18.01.84 Patentblatt 84/3**

(45) Bekanntmachung des Hinweises auf die Patenterteilung:
**29.01.86 Patentblatt 86/5**

(84) Benannte Vertragsstaaten:
**BE CH DE FR GB IT LI**

(56) Entgegenhaltungen:
**DE - A - 2 847 187**
**FR - A - 1 300 965**
**US - A - 1 808 274**
**US - A - 1 894 004**
**US - A - 3 890 043**
**US - A - 4 053 219**

(73) Patentinhaber: **CIBA-GEIGY AG, Klybeckstrasse 141,**
**CH-4002 Basel (CH)**

(72) Erfinder: **Turner, George F. A. M., Monks Acres**
**Woolmongers Lane Blackmore, Ingatestone Essex**
**CM4 OJX (GB)**

## Beschreibung

Die Erfindung betrifft photographische Hellraumvergrösserungsgeräte vom Typ mit konstanter Brennweite.

Photographische Vergrösserungsgeräte sind verhältnismässig teure Einrichtungen für jemand, der seine eigenen Negative kopieren möchte, oder auch für Schulen, in denen eine Anzahl von Vergrösserungsgeräten zur Benutzung in einer Schulklasse erforderlich sind. Einer der in der Herstellung besonders teuren Teile eines üblichen Vergrösserungsgeräts ist der zur Einstellung der Brennweite der Vergrösserungslinse erforderliche Mechanismus, der es gestattet, verschiedene Vergrösserungen eines Feldbereiches eines zu kopierenden Negativs vorzunehmen. Jedoch ist es für einen Anfänger auf dem photographischen Gebiet oder für eine Schule vielleicht noch wichtiger, ein billiges Vergrösserungsgerät anzuschaffen, durch dessen Verwendung Normalvergrösserungen ausgehend von einem normalen Negativ hergestellt werden können, als ein teureres Vergrösserungsgerät mit bedeutend mehr anderweitigen Anwendungsmöglichkeiten, deren Anwendung jedoch unwahrscheinlich ist.

Daher befinden sich auf dem Markt eine Anzahl Vergrösserer mit konstanter Brennweite, um die Nachfrage nach solchen billigen Vergrösserungsgeräten zu befriedigen. Üblicherweise bestehen diese Vergrösserungsgeräte aus einem lichtdichten Rahmen oder kastenartigen Gehäuse, durch dessen Inneres sich der bilderzeugende Strahlengang erstreckt. Auf dem Gehäuse ist ein Vorlagenträger mit einer darunter befindlichen Vergrösserungslinse angebracht, und auf dem Vorlagenträger ist das Lampenhaus montiert. In einer solchen Anordnung ist der Abstand der Linse von der Bildprojektionsebene konstant. Die optische Characteristik der Linse ist oft so gewählt, dass bei Anwesenheit einer Standard-35-mm-Bildvorlage (Negativ) im Vorlagenträger die Grösse des auf die Projektionsebene projizierten Bildes eine Standardgrösse, d.h. 8,9 cm × 12,7 cm beträgt.

Jedoch ist es bei einer Anzahl solcher Vergrösserer schwierig, das beleuchtete Bild im Projektionsfeld klar zu sehen, da die Umhüllung die Sicht verdunkelt. Auch besitzen Hellraumvergrösserer dieser Art manchmal Armlöcher in der einschliessenden Wandung, in die der Benutzer die Arme steckt, um das Kopiermaterial vor der Belichtung in die gewünschte Stellung zu bringen, und um es nach der Belichtung in eine lichtdichte Hülle (Kassette) einzubringen. Üblicherweise ist es dabei erforderlich, dass die Armlöcher mit Ärmeln versehen sind, um die Umschliessung lichtdicht zu halten. Es ist daher schwierig, eine möglichst einfache Anordnung für die Durchführung der Belichtung des Kopiermaterials zu finden.

In der US-A Nr. 4053219 ist ein Hellraumvergrösserer beschrieben, der aber nicht zum Typ mit konstanter Brennweite gehört. Die lichtdichte Umhüllung dieses Vergrösserungsgeräts umfasst zwei Armlöcher, von denen eines in einem Handschuh endet, so dass der betreffende Arm herausgezogen werden kann, ohne den Einfall von Licht zu gestatten. Das Fokussieren des Vergrösserers und die Belichtung des Kopiermaterials werden unter Verwendung desjenigen Armes durchgeführt, der unter Wahrung der Lichtdichtigkeit unschwer wieder aus dem Vergrösserer herausgezogen werden kann. Nun ist jedoch im umschlossenen Inneren des Vergrösserers die Anwesenheit von zwei Armen erforderlich, wenn das Kopiermaterial in das Bildprojektionsfeld eingebracht und wenn das belichtete Kopiermaterial in den Verarbeitungszylinder hineingetan werden soll.

In der DE-A Nr. 2847187 wird ein Hellraumvergrösserer beschrieben, bei welchem zwei Einrichtungen zum Betrachten des Bildes von ausserhalb des Vergrösserers vorgesehen sind. In der einen Einrichtung ist ein schwenkbarer Spiegel zwischen der Vergrösserungslinse und dem Bildprojektionsfeld vorhanden, der Licht auf einen an der Aussenwand des Vergrösserers angebrachten Schirm reflektiert, aber aus dem Strahlengang des projizierten Bildes entfernt sein muss, wenn das Kopiermaterial belichtet wird. Bei der anderen Einrichtung ist ein schwenkbarer Spiegel zwischen der Vorlage und der Vergrösserungslinse vorgesehen. In seiner einen Stellung erzeugt dieser Spiegel für den Benutzer ein reelles Bild der Vorlage ausserhalb des Vergrösserers, während der Spiegel in seiner anderen Stellung aus dem Strahlengang herausbewegt ist, der durch die Bildvorlage hindurch zur Vergrösserungslinse führt.

Das Vergrösserungsgerät der DE-A 2847187 ist jedoch kein solches mit konstanter Brennweite und erfordert weiter eine elektromechanische Einrichtung, um die Belichtung zu bewirken. Auch sind mechanische Mittel vorgesehen, um das Kopiermaterial in das Belichtungsfeld einzubringen und es nach der Belichtung wieder daraus zu entfernen, wodurch im umschlossenen Innenraum des Vergrösserers keine Armlöcher erforderlich sind.

Es ist die Aufgabe der vorliegenden Erfindung, ein Hellraumvergrösserungsgerät zu verwirklichen, in dessen umschlossenen Gehäuseinneren ein aufrechtes Bild der beleuchteten Bildvorlage klar sichtbar ist, und in welchem die Belichtung des Kopiermaterials bewirkt werden kann, ohne dass ein Arm des Benutzers aus den Armlöchern herausgezogen werden muss.

Diese Aufgabe wird gemäss der Erfindung gelöst durch das im Patentanspruch 1 beschriebene Hellraumvergrösserungsgerät. Merkmale bevorzugter Ausführungsformen des Vergrösserungsgeräts nach der Erfindung sind in den Unteransprüchen beschrieben.

Die beigefügte Zeichnung dient zur Veranschaulichung der Erfindung. In ihr zeigen

Fig. 1 eine auseinandergezogene Darstellung in Perspektive eines Vergrösserungsgeräts nach der Erfindung,

Fig. 2 eine seitliche Ansicht im Schnitt eines aufrecht gestellten Vergrösserungsgeräts nach der Erfindung, mit einem Spiegel in geneigter Betrachtungsstellung, und

Fig. 3 die gleiche Ansicht wie in Fig. 2, aber mit dem Spiegel in die Belichtung gestattender Stellung.

In allen Figuren haben gleiche Bezugszeichen die gleiche Bedeutung.

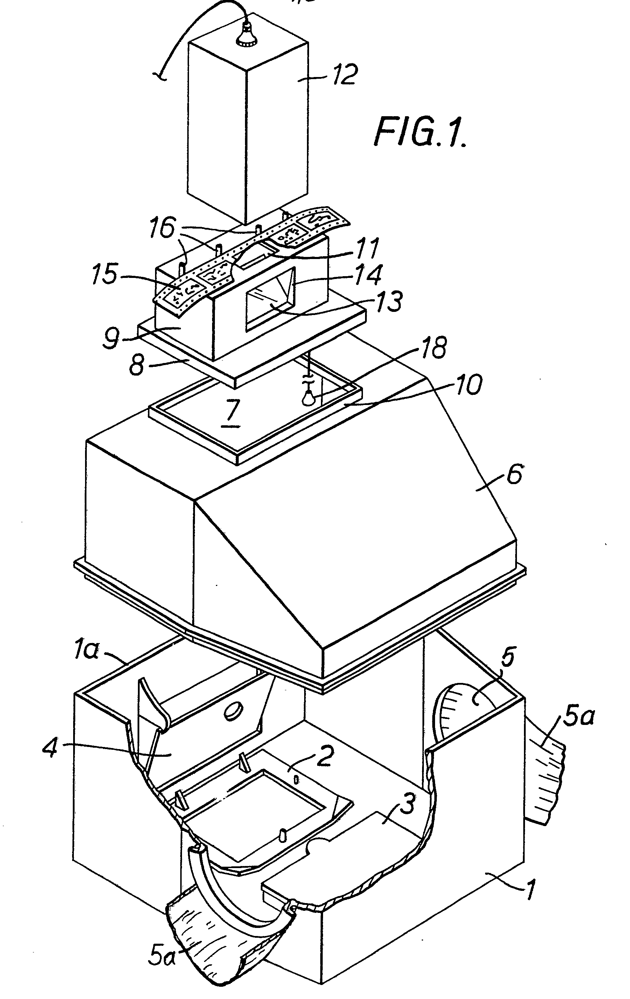

Das in Fig. 1 gezeigte Vergrösserungsgerät umfasst eine lichtundurchlässige kastenförmige untere Gehäusehälfte 1, auf deren Bodenfläche im Kasteninneren ein abhebbarer Rahmen 2 und eine lichtdicht abschliessbare Papierkassette 3 angebracht sind.

In den beiden Öffnungen 5 in den beiden Seitenwänden des Kastens 1 sind zwei durch lichtausschliessende Ärmel gebildete Armlöcher 5a angebracht. Auf der Rückwand 1a ist eine Schlitzeinrichtung 4 vorhanden, mit der eine äussere Behandlungswanne (nicht gezeigt) verbunden werden kann, und durch die belichtetes Material in lichtdichter Weise in die Behandlungswanne überführt werden kann.

Über der unteren Gehäusehälfte 1 ist als obere Gehäusehälfte ein Kastendeckel 6 aus rot gefärbtem Polystyrol vorhanden. Der Deckel 6 passt lichtdicht auf den Kasten 1.

Im obersten flachen Teil des Deckels 6 befindet sich eine Öffnung 7, über der ein an einem entfernbaren Vorlagenträger 9 vorgesehener umlaufender Flansch 8 sie überdeckend angebracht ist.

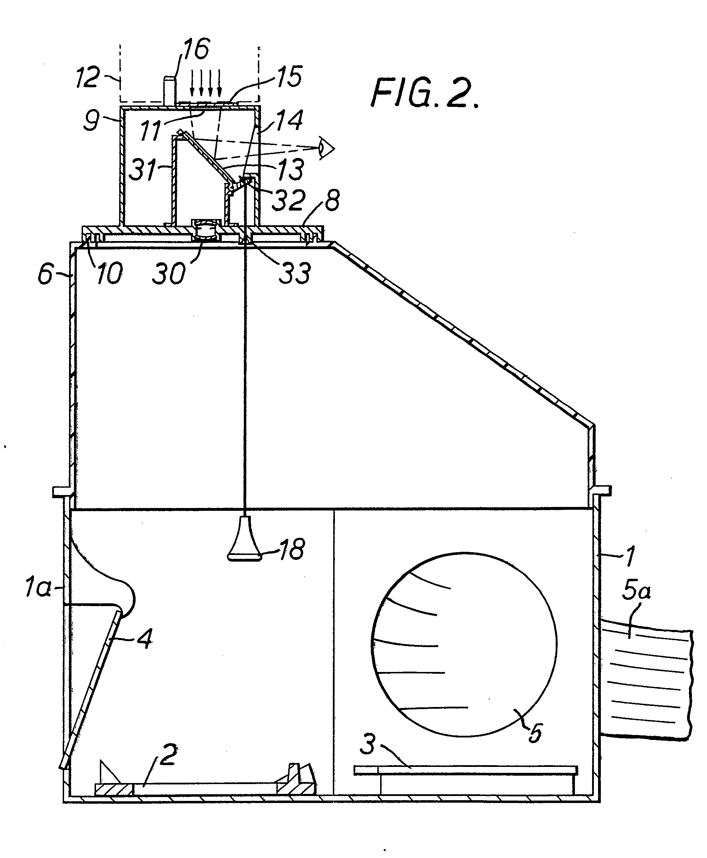

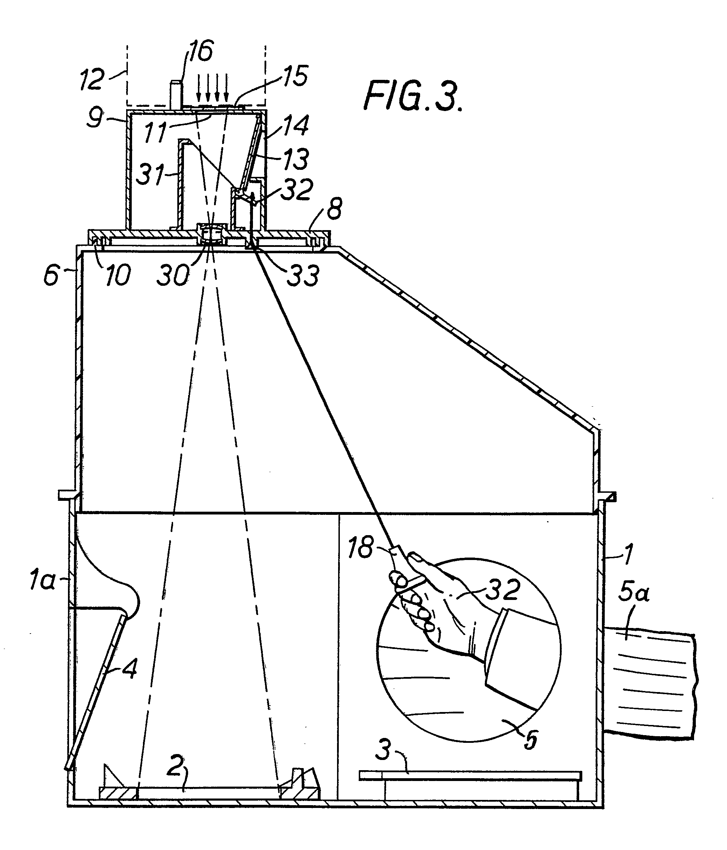

In der Oberseite des Vorlagenträgers 9 befindet sich eine Lichteinlassöffnung 11, durch welche hindurch Licht aus dem entfernbaren Lampenhalter 12 in das Gehäuseinnere gerichtet wird. Unter der Lichteinlassöffnung 11 befindet sich ein schräg einstellbarer Spiegel 13, der in Fig. 1, durch eine Ausfallöffnung 14 in der Seitenwand des Vorlagenhalters 9 sichtbar, in geneigter Stellung gezeigt ist. Auf der Oberseite des Vorlagenträgers 9 ist ein Streifen 15 eines 35-mm-Negativfilms gezeigt (und zwar teilweise weggeschnitten, um die darunter liegende Lichteinlassöffnung 11 sichtbar werden zu lassen). Von der Seite des Benutzers her gesehen befindet sich hinter dem Film eine Reihe Anlagezapfen 16, an denen die Filmkante anliegt. Vom Vorlagenträger 9 hängt eine Zugleine 18 herab, mittels deren der Spiegel 13 aus dem Lichtstrahlengang (wie in Fig. 2 und 3 gezeigt) herausgeschwenkt werden kann. An seiner Unterseite besitzt der Flansch 8 des Vorlagenträgers 9 in Fig. 2 und 3 gezeigte Mittel, mit denen er auf eine entsprechende, aus der Oberseite des Deckels 6 nach oben vorspringende, die Öffnung 7 als Viereck umgebende Randleiste 10 mit Passsitz aufgesetzt werden kann.

Wie weiter aus Fig. 2 und 3 ersichtlich ist, befindet sich mittig im Boden des Vorlagenträgers 9 eine Vergrösserungslinse 30, während auf einem Auflagerahmen 31 im Inneren des Vorlagenträgers der schwenkbare Spiegel 13 in seiner in das Innere des Vorlagenträgers 9 geklappten Schrägstellung aufliegt. Die Zugleine 18 ist am freien Ende eines mit dem Spiegel 13 fest verbundenen, z.B. durch eine Feder (nicht gezeigt) in die Schrägstellung belasteten Schwenkhebels 32 befestigt und ist durch eine Öffnung 33 im Boden des Vorlagenträgers 9 hindurchgeführt.

In der in Fig. 2 gezeigten Benutzungsphase liegt eine Bildvorlage 15 über der Öffnung 11 und die Lampe (nicht gezeigt) im Lampenhaus 12 ist eingeschaltet. Der Spiegel 13 befindet sich in seiner Schrägstellung, so dass Licht aus dem Lampenhaus nach Durchtritt durch die Bildvorlage durch den Spiegel 13 und von diesem durch die Öffnung 14 hindurch zu einem ausserhalb des Vergrösserers befindlichen Benutzer hin reflektiert wird.

In der in Fig. 3 gezeigten Phase ist die Zugleine 18 durch den Benutzer mit seiner durch das Armloch 5a gesteckten Hand 32 abwärts gezogen worden. Hierdurch ist der Spiegel 13 aus dem Pfad des vom Lampenhause 12 kommenden Lichtes herausbewegt, so dass dieses Licht nun durch die Linse 30 fällt und ein vergrössertes Bild der Vorlage in dem durch den Rahmen 2 eingegrenzten Projektionsfeld erzeugt.

Die in den Fig. 1 bis 3 gezeigte Ausführungsform des Vergrösserungsgeräts nach der Erfindung ist für die Einbringung von 35-mm-Negativen in den Vorlagenträger und für die Projektion des gesamten Bildfeldes dieses Negativs (3,0 cm × 2,0 cm) auf ein Feld von 12 cm × 8 cm (Kopiergrösse) innerhalb des Rahmens 2 ausgelegt. Dies erfordert eine Distanz von 25 cm zwischen der Linse 30 und dem Feld im Rahmen 2, eine Distanz von 6,25 cm zwischen der Linse 30 und dem Vorlagenträger 9 und eine Brennweite der Linse 30 von 5 cm.

Das Vergrösserungsgerät kann bei vollem Tageslicht benutzt werden. Dabei ist in der Kassette 3 ein Stapel Kopiermaterial eingelegt und von aussen her vor der Öffnung 4 eine tageslichtdichte Behandlungswanne befestigt. Der Deckel der Wanne kann geöffnet und ein Bogen belichteten Kopiermaterials in die Behandlungswanne eingeführt werden. Ein Streifen von 35-mm-Film 15 wird in den Vorlagenträger 9 gelegt und die Lampe im Lampenhaus 12 eingeschaltet. Ein reelles aufrechtes Bild der Vorlage, das vom schräggestellten Spiegel 13 reflektiert wird, wird nun vom Benutzer erblickt. Nachdem der Benutzer die Lage der Bildvorlage nach Wunsch korrigiert hat, führt er seine Hände durch die Armlöcher 5a ein und legt dann in den Rahmen 2 ein unbelichtetes Blatt Kopiermaterial aus der Kassette 3 ein.

Mit seinen Armen immer noch in den Armlöchern 5a zieht der Benutzer nun die Zugleine 18 während der von ihm bestimmten korrekten Belichtungszeit. Dann lässt er die Zugleine 18 los und führt die belichtete Kopie durch die Öffnung 4 in die lichtdichte Behandlungswanne ein. Das Kopiermaterial wird dann behandelt, und es kommt oft vor, dass noch eine oder zwei weitere Belichtungen erforderlich sind, um eine korrekt belichtete und behandelte Kopie zu erzeugen.

In einer Abänderung des in den Fig. 1 bis 3 gezeigten Vergrösserungsgeräts ist die Zugleine 18 nicht federbelastet. In diesem Falle wird die Leine 18 gezogen, um den Spiegel aus dem Lichtpfad herauszubewegen, während eine andere Leine (nicht gezeigt) gezogen wird, um den Spiegel wieder in den Strahlengang hineinzubewegen.

In der gezeigten Ausführungsform des Vergrösserungsgerätes nach der Erfindung ist der beweglich geneigte Spiegel schwenkbar gelagert, so dass er aus einer Schrägstellung, in der er den Strahlengang im Vergrösserer unterbricht, in eine senkrechte Stellung bewegt werden kann, in welcher er diesen Strahlengang nicht unterbricht. Diejenige Stellung, in welche der Spiegel aus einer Schrägstellung bewegt wird, um sich ausserhalb des Lichtpfades zu befinden, braucht keine vertikale zu sein, sondern kann auch jede beliebige andere Stellung sein, in der sich der Spiegel nicht mehr im Lichtpfad befindet.

In der Tat braucht der Spiegel nicht schwenkbar gelagert zu sein, solange seine erste Stellung eine schräge, im Lichtpfad befindliche ist und er sich in der zweiten Stellung nicht im Lichtpfad befindet.

So kann in einer anderen Ausführungsform (nicht gezeigt) der schräg gestellte Spiegel in einem verschieblichen Spiegelträger im Vorlagenträger untergebracht sein. Beim Betätigen der Zugleine 18 wird dann der gesamte Spiegelträger mit dem schräg geneigten Spiegel aus dem Lichtpfad herausgezogen.

## Patentansprüche

1. Hellraumvergrösserungsgerät vom Typ mit fester Brennweite, mit einem den bilderzeugenden Strahlengang umschliessenden Gehäuse (1) und zwei Armlöchern (5a), die dem Benutzer gestatten, seine Hände in das Gehäuseinnere zu stecken, mit einem Lampenhaus (12), einem über dem Gehäuse ausserhalb desselben angeordneten Vorlagenträger (9), und mit einer Vergrösserungslinse (30) im Vorlagenträger (9) sowie mit einem im Vorlagenträger zwischen der Bildvorlage (15) und der Vergrösserungslinse (30) angeordneten beweglichen, bei Betrachtung schräggestellten Spiegel (13), welcher in einer ersten Stellung, während das Lampenhaus bei gleichzeitiger Anwesenheit einer Bildvorlage im Vorlagenträger in Betrieb ist, ein aufrechtes Bild der beleuchteten Bildvorlage aus dem Vergrösserungsgerät heraus reflektiert, so dass es betrachtet werden kann, während der Spiegel in einer zweiten Stellung von seiner Position unterhalb der Bildvorlage wegbewegt wird und hierdurch gestattet, dass das Bild der beleuchteten Bildvorlage auf das Bildprojektionsfeld im Gehäuseinneren fällt, dadurch gekennzeichnet, dass eine von Hand aus dem Inneren des umschliessenden Gehäuses (1) steuerbare Einrichtung (18, 32) vorgesehen ist, mittels welcher der bei Betrachten der Bildvorlage schräggestellte Spiegel (13) aus dem sich durch die Bildvorlage (15) zur Vergrösserungslinse (30) hin und von dort zum Bildprojektionsfeld erstreckenden Lichtpfad herausbewegt werden kann, so dass das in der Projektionsebene im Gehäuseinneren befindliche Kopiermaterial belichtet werden kann.

2. Vergrösserungsgerät nach Anspruch 1, dadurch gekennzeichnet, dass der Spiegel (13) an einem Federorgan (32) befestigt ist, das mit einer herabhängenden Zugleine (18) versehen ist, wobei durch Ziehen der Zugleine (18) der Spiegel (13) bewegt wird.

3. Vergrösserungsgerät nach Anspruch 1 oder 2, dadurch gekennzeichnet, dass der Spiegel (13) aus seiner Schrägstellung in eine im wesentlichen senkrechte Stellung bewegt wird.

4. Vergrösserungsgerät nach Anspruch 1, dadurch gekennzeichnet, dass der schräg gestellte Spiegel (13) in einem Rahmen im Vorlagenträger (9) untergebracht ist, der zusammen mit dem Spiegel (13) aus seiner Stellung unterhalb der Bildvorlage (15) seitlich wegbewegt werden kann, um hierduch zu gestatten, dass das Bild der beleuchteten Bildvorlage in das Bildprojektionsfeld fällt.

## Claims

1. A daylight enlarger of the fixed focus type, comprising a casing (1) enclosing the image forming area, and two arm holes (5a) which allow an operator to place his hands inside the casing, and a lamphouse (12), a transparency holder (9) located above the casing and outside it, and an enlarging lense (30) in the transparency holder (9), as well as a movable mirror (13) located in the transparency holder between the transparency (15) and the enlarging lense (30), which mirror is inclined when viewing and which in a first position, when the lamphouse is operating with a transparency in the holder, reflects an erect image of the illuminated transparency away from the enlarger so that it can be viewed, and which mirror in a second position is moved from beneath the transparency so allowing the image of the illuminated transparency to fall on the image projection area inside the casing, characterizing in that a device (18, 32) which is manually controllable from inside the casing (1) is provided, by means of which device the mirror (13), which is inclined when viewing the transparency, can be moved out of the path of light which passes through the transparency (15) to the enlarging lense (30) and thence to the image projection area so enabling print material present in the projection plane inside the casing to be exposed.

2. An enlarger according to Claim 1, characterized in that the mirror (13) is attached to a spring means (32) having a hanging chord (18), said mirror (13) being moved when the chord (18) is pulled.

3. An enlarger according to either of Claims 1 or 2, characterized in that the mirror (13) is moved from the inclined position to a substantially vertical position.

4. An enlarger according to Claim 1, characterized in that the inclined mirror (13) is located in a compartment in the transparency holder (9), which compartment, together with the mirror (13), can be moved sideways from beneath the transparency (15) to allow the image of the illuminated transparency to fall on the image projection area.

## Revendications

1. Agrandisseur utilisable à la lumière du jour du type à distance focale fixe comportant un carter (1) qui renferme le trajet des rayons lumineux qui produisent l'image et deux trous pour les bras (5a) qui permettent à l'utilisateur de passer ses mains dans l'intérieur du carter, comportant un boîtier à lampe (12), un support d'original (9) disposé extérieurement et au-dessus du carter et une lentille d'agrandissement (30) placée à l'intérieur du support d'original (9) ainsi qu'un miroir (13) placé obliquement, mobile, disposé dans le support d'original entre l'original (15) et la lentille d'agrandissement (30), miroir (13) qui dans une première position pendant que le boîtier de lampe fonctionne tandis qu'un original se trouve dans le support d'original, réfléchit, vers l'extérieur de l'agrandisseur, une image à l'endroit de l'original frappé par la lumière, de telle sorte que cette image puisse être examinée pendant que le miroir est déplacé vers une deuxième position se trouvant sous l'original et permet ainsi que l'image de l'original éclairé soit projeté sur le champ de projection placé à l'intérieur du carter, caractérisé par le fait qu'un dispositif (18-32) commandable à la main à partir de l'intérieur du carter (1) soit prévu, dispositif au moyen duquel le miroir (13) placé obliquement quand on regarde l'original puisse être sorti du trajet de la lumière qui passe à travers l'original (15) vers la lentille d'agrandissement (30) et de là vers le champ de projection, de telle sorte que le matériel de copie placé dans le plan de projection à l'intérieur du carter puisse être exposé à la lumière.

2. Agrandisseur selon la revendication 1 caractérisé par le fait que le miroir (13) est fixé sur un organe faisant fonction de ressort (32) qui est muni d'une cordelette de traction (18) pendant vers le bas, la traction de ladite cordelette (18) ayant pour effet de déplacer le miroir (13).

3. Agrandisseur selon la revendication 1 ou 2, caractérisé par le fait que le miroir (13) est déplacé de sa position oblique dans une position sensiblement verticale.

4. Agrandisseur selon la revendication 1 caractérisé par le fait que le miroir (13) placé obliquement est logé dans un cadre à l'intérieur du support d'original (9), qui peut être sorti latéralement de sa position au-dessous de l'original (15) ensemble avec le miroir (13) afin de permettre que l'image de l'original exposé à la lumière tombe dans le champ de projection.

FIG.1.

FIG.2.

FIG.3.